# EUROPEAN PATENT APPLICATION

(11) **EP 4 557 582 A1**
(43) Date of publication of application: **21.05.2025**
(21) Application number: 23893415.2
(22) Date of filing: 26.09.2023
(51) Int. Cl.: H02K 3/12

(54) **STATOR ASSEMBLY AND MOTOR COMPRISING SAME**

(30) Priority: 25.11.2022 CN 202211494277
(71) Applicant: Deepal Automobile Technology Co., Ltd., Chongqing 401133 (CN)
(72) Inventor: WANG, Xuedong, Chongqing 401135 (CN); LU, Youjun, Chongqing 401135 (CN); MA, Jia, Chongqing 401135 (CN)
(74) Representative: 2K Patentanwälte Blasberg Kewitz & Reichel
(86) International application number: PCT/CN2023/121338
(87) International publication number: WO 2024/109323

(57) **Abstract**

A stator assembly and a motor comprising same. The stator assembly comprises a stator core and a stator winding, a hollow shaft hole is formed in the stator core, a plurality of stator slots are formed on the inner surface of the shaft hole in the stator core, and the plurality of stator slots are distributed in the radial direction of the shaft hole and penetrate through two ends of the stator core; the stator winding is formed by winding wires with a span along the stator slots, and the cross section of each wire is rectangular; N+2 wire layers are arranged in sequence in the stator slots in the radial direction of the stator core, wherein the first to fourth layers of wires are arranged side by side at the bottoms of the stator slots, the rest layers of wires are stacked layer by layer, and N is an even number greater than 2; the stator winding comprises an in-slot winding and an end winding, the end winding comprises a first end and a second end, and the in-slot winding corresponds to the first to N+2 layers of wires according to the wire layers in the stator slots. Compared with the prior art, the cooperation of the structure of the stator slots, and the structure and a stacking mode of the wires effectively improves the slot fill factor of the stator slots, reduces copper loss, and improves the efficiency of the motor.

## Description

### TECHNICAL FIELD

The present invention relates to the field of drive motor technologies of new energy vehicles, and specifically, to a stator assembly and a motor comprising thereof.

### BACKGROUND

A motor is a main power source of a new energy pure electric vehicle. With rapid development of new energy pure electric vehicles, a requirement for motor performance gets increasingly higher. How to improve efficiency of a motor has always been a subject of research in main engine plants. To implement better performance with a relatively small electromagnetic volume, a flat copper wire motor already becomes a mainstream design trend. Athick round wire or a square wire is used as a motor wire to replace a conventional thin round wire to increase space utilization of a stator slot, that is, a slot filling factor.

To further increase the slot filling factor of a motor stator, a special-shaped slot or parallel tooth design is proposed for the motor. However, in an existing design solution of a special-shaped slot, in particular, excessively large differences between length and width sizes of several layers of flat copper wires at the bottom of a stator slot of a motor make it impossible to adapt an odd number of layers of flat copper wires to the special-shaped slot, adapt different layers of flat copper wires to a parallel slot, or use an even number of layers of flat copper wires without the special-shaped slot. Consequently, a requirement for engineering design of a flat copper wire motor cannot be met.

In addition, if a width-to-thickness ratio of the flat copper wire is excessively large, a space occupied by the flat copper wire at an end part of a winding becomes large when the flat copper wire is bent to form a coil, resulting in failure to implement connection between layers. In addition, in the bending process, the excessively large width-to-thickness ratio leads to an excessively large turning radius, resulting in an insulation problem caused by an excessively thin paint film at a local part of the flat copper wire. A slot depth of the motor stator cannot be designed infinitely. More copper wires need to be placed in a limited space to increase space utilization of the stator slot. In this way, a copper loss of the motor is reduced while more copper wires are placed, thereby improving efficiency of the motor.

Publication No. CN114552837A discloses a stator assembly having a wire with a small width-to-thickness ratio and a motor. Several stator slots are disposed on a stator core, and 3+n layers of wires are successively disposed in each stator slot along a radial direction of the stator core. Three layers of wires close to an outer side of the stator core are double-wire layers, and other n layers of wires are single-wire layers. n is an odd number greater than or equal to 1. In this invention, 2+4+n wires are arranged, that is, two wires are disposed for each of the three layers of wires close to the outer side of the stator core, thereby effectively avoiding an excessively large width-to-thickness ratio of a wire of a single slot, reducing a turning radius required when the wire is shaped, and reducing a height of an end part of an axial winding of the motor.

Publication No. CN114726133A discloses a flat wire double-layer lap winding armature winding, a stator including the same, and a motor. The flat wire double-layer lap winding armature winding includes three phase windings. Each phase winding includes a plurality of phase spreads. Each phase spread includes two flat copper wire coils. The flat copper wire coil is led in from an upper layer of a coil slot and is led out from a lower layer of another coil slot, and sequentially enters and exits between adjacent layers of the two coil slots, until the lead-out end is led out from the lower layer of the another coil slot. In addition, a lead-out end of a flat copper wire coil is welded to a lead-in end of another flat copper wire coil to form a phase spread. The upper layer and the lower layer are distributed from the inside to the outside along a radial direction of a stator core. In this invention, double-layer lap winding of the flat copper wire coil in the coil slot can be implemented, thereby simplifying a wire insertion process and reducing a quantity of welding spots for the flat copper wire on the motor.

In the foregoing solutions, although a copper loss of the motor is reduced to some extent, space utilization of the stator slot is limited, and efficiency of the motor is low.

### SUMMARY

In view of the foregoing disadvantages in the conventional technology, the present invention is intended to provide a stator assembly and a motor thereof, to resolve a technical problem that efficiency of a motor is low in the conventional technology.

To achieve the foregoing objective and another related objective, the present invention provides a stator assembly, including:
a stator core body, where the stator core body has a hollowed shaft hole, a plurality of stator slots are circumferentially disposed on an inner surface of the shaft hole of the stator core body, and the stator slots run through two ends of the stator core body along an axial direction; and
a stator winding, including a plurality of groups of wires that are span-wound along the stator slots, where
N+2 layers of wires are arranged in each stator slot along a stator core, first to fourth layers of wires are arranged at the bottom of the stator slot side by side, other layers of wires are stacked from the outside to the inside along a radial direction of the stator core layer by layer, and N is an even number greater than 2;
the stator winding, the stator winding includes in-slot windings and end windings, the end winding includes a first end and a second end, and the in-slot windings are correspondingly No. 1 to No. N+2 wires according to the wire layers in the stator slot;
in two stator slots a and b for span winding, a span winding manner at the first end is that a No. 1 wire in the ath stator slot is connected to a No. 1 wire in the bth stator slot, a No. 2 wire in the ath stator slot is connected to a No. 3 wire in the bth stator slot, a No. 4 wire in the ath stator slot is connected to a No. 5 wire in the bth stator slot, and a No. N wire in the ath stator slot is connected to a No. N+1 wire in the bth stator slot; and
a span winding manner at the second end is that a No. 2 wire in the ath stator slot is connected to a No. 1 wire in the bth stator slot, a No. 4 wire in the ath stator slot is connected to a No. 3 wire in the bth stator slot, a No. 6 wire in the ath stator slot is connected to a No. 5 wire in the bth stator slot, and a No. N+2 wire in the ath stator slot is connected to a No. N+1 wire in the bth stator slot.

Further, a quantity of stator slots is Z, a quantity of poles of the stator winding is P, span winding of the stator winding is implemented at an interval of X stator slots, and X=Z/P.

According to the foregoing technical means, a span for span winding of the stator winding is set according to the quantity of stator slots and the quantity of poles of the stator slot. Such span winding resolves a problem that width-to-thickness ratios of copper wire coils between different layers are inconsistent due to a structure based on such a slot profile, and resolves a problem that welding is difficult to be implemented at a technological level due to the foregoing problem.

Further, the first to fourth layers of wires in the stator slot are arranged side by side in pairs at the bottom of the stator slot, and fifth to (N+2)th layers of wires are stacked layer by layer in the stator slot.

According to the foregoing technical means, a slot filling factor can be further increased in the arrangement manner of the wires in the stator slot.

Further, a width-to-thickness ratio of the first to fourth layers of flat copper wires is different from that of the other layers of flat copper wires.

According to the foregoing technical means, a copper loss in a bending process of the flat copper wire is fully reduced.

Further, a length edge of each of the first to fourth layers of wires in the stator slot is arranged along a radial direction of the shaft hole, and a width edge of each of the other layers of wires is arranged along the radial direction of the shaft hole.

According to the foregoing technical means, a slot filling factor can be further increased in the arrangement manner of the wires in the stator slot.

Further, the stator slot successively includes a bottom slot, a middle slot, and a slot opening from the bottom to the top, widths of the bottom slot, the middle slot, and the slot opening gradually decrease, and the first to fourth layers of wires are disposed in the bottom slot.

According to the foregoing technical means, according to different quantity selections for the flat copper wires in design solutions of the motor, the flat copper wires are embedded into the stator slot layer by layer and a slot profile of a stator is adjusted according to different sizes of the flat copper wires, and a width of a slot bottom location is adjusted according to different solutions, so that as much copper as possible is placed in the stator slot while a stator tooth part of the motor is better used.

Further, a height of the bottom slot is consistent with a height of the middle slot.

According to the foregoing technical means, each layer of flat copper wire can be fully used.

Further, a structure between two adjacent stator slots is a stator tooth, and a width of the bottom of the stator tooth is consistent with a width of the top of the stator tooth.

According to the foregoing technical means, the flat copper wire is fully used by disposing the stator tooth.

Further, the quantity of stator slots is 48, the quantity of poles of the stator winding is 8, and span winding of the stator winding is implemented at an interval of 6 stator slots.

According to the foregoing technical means, the arrangement is widely applicable.

Further, when span winding is performed, spans for the end windings of the stator winding are that a first stator slot, a seventh stator slot, a thirteenth stator slot, a twentieth stator slot, a twenty-sixth stator slot, a thirty-third stator slot, a thirty-seventh stator slot, a forty-third stator slot, and the first stator slot are successively and cyclically connected.

According to the foregoing technical means, the arrangement of the stator winding can further improve efficiency of the motor.

Further, in the spans for the end windings, a wire in a fourteenth stator slot is connected to a wire in a nineteenth stator slot.

According to the foregoing technical means, a short-pitch effect is formed and winding harmonics are further reduced, and sine wave quality of voltage excitation is improved.

Correspondingly, the present invention further provides a stator assembly, including:
a stator assembly, where the stator assembly is any stator assembly described above; and
a motor body, where the stator assembly is mounted inside the motor body.

As described above, according to the foregoing technical means of the present invention, the width of the bottom location of the stator slot is increased for fitting between the stator slot and the wires. After the width of the bottom location of the stator slot is adjusted, utilization of the tooth part of the stator is increased. The wires whose cross sections are rectangular are relatively properly arranged, thereby increasing the slot filling factor of the stator slot, reducing the copper loss of the winding, improving overall efficiency of the motor, and facilitating realization of overall performance of the motor. Compared with the conventional technology, matching between a structure of the stator slot and a structure and a stacking manner of the wires effectively increases the slot filling factor of the stator slot, reduces the copper loss, and improves efficiency of the motor.

### BRIEF DESCRIPTION OF DRAWINGS

FIG. 1 is a diagram of a local part of a stator lamination according to an example of the present invention;
FIG. 2 is an enlarged view of a slot profile of a stator lamination according to an example of the present invention;
FIG. 3 is a connection diagram of a stator winding according to an example of the present invention;
FIG. 4 is an enlarged view of a local part at a location A in FIG. 3;
FIG. 5 is an enlarged view of a local part at a location B in FIG. 3;
FIG. 6 is a diagram of coils of a stator winding according to an example of the present invention;
FIG. 7 is a diagram of a stator assembly according to an example of the present invention;
FIG. 8 is a distribution map of CLTC operating points of a specific vehicle model according to an example of the present invention; and
FIG. 9 is a map of efficiency of a motor according to an example of the present invention.

Stator core body-10; stator slot-11; bottom slot-111; middle slot-112; slot opening-113; stator tooth-12; stator winding-20; and wire-21.

### DESCRIPTION OF EMBODIMENTS

The following describes implementations of the present invention with reference to accompanying drawings and preferred embodiments. A person skilled in the art can easily understand other advantages and effects of the present invention based on content disclosed in this specification. The present invention may be further implemented or applied by using other different specific implementations. Various details in this specification may also be modified or changed based on different viewpoints and applications without departing from the present invention. It should be understood that the preferred embodiments are merely intended to describe the present invention, and are not intended to limit the protection scope of the present invention.

It should be noted that the figures provided in the following embodiments merely schematically describe the basic concept of the present invention. Therefore, the figures display only components related to the present invention instead of being drawn based on a quantity, shapes, and sizes of components in actual implementation. Forms, the quantity, and a ratio of the components in actual implementation of the figures may be randomly changed, and a component layout form of the figures may also be more complex.

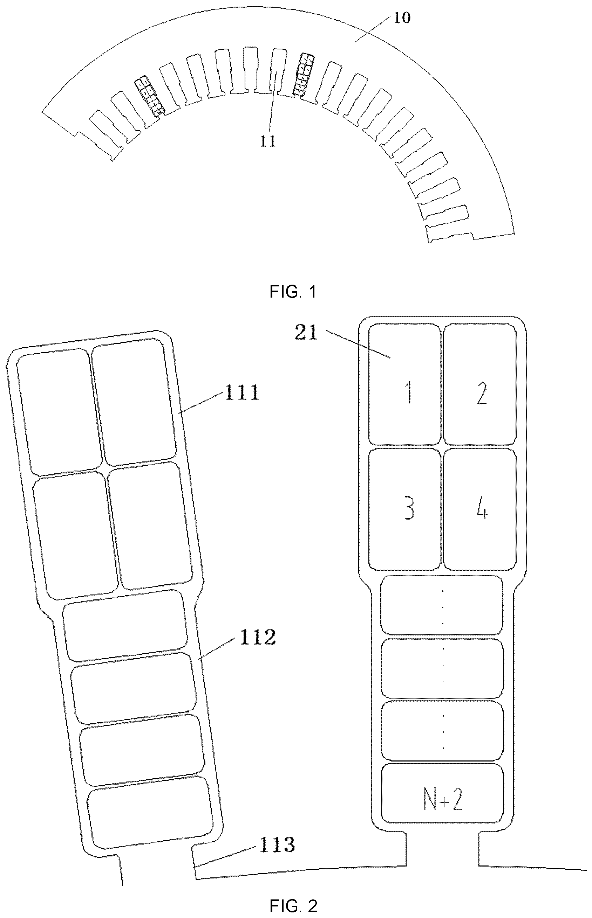

The present invention provides a motor with high efficiency. The motor includes a motor body and a stator assembly. The stator assembly may be a stator assembly in any one of the following embodiments. With reference to FIG. 1, FIG. 2, and FIG. 7, the stator assembly includes a stator core body 10 and a stator winding 20. The stator core body 10 has a hollowed shaft hole. A plurality of stator slots 11 are disposed on an inner surface of the shaft hole of the stator core body 10. The plurality of stator slots 11 are distributed along a radial direction of the shaft hole and run through two ends of the stator core body 10. The stator winding 20 is formed through span winding of wires 21 along the stator slots 11, and a cross section of the wire 21 is rectangular.

N+2 layers of wires 21 are arranged in each stator slot 11 along a radial direction of a stator core, first to fourth layers of wires 21 are arranged at the bottom of the stator slot 11 side by side, other layers of wires 21 are stacked from the outside to the inside along the radial direction of the stator core layer by layer, and N is an even number greater than 2.

The stator winding 20, the stator winding 20 includes in-slot windings and end windings, the end winding includes a first end and a second end, and the in-slot windings are correspondingly No. 1 to No. N+2 wires 21 according to the wire 21 layers in the stator slot 11.

In two stator slots a and b for span winding, a span winding manner at the first end is that a No. 1 wire 21 in the ath stator slot 11 is connected to a No. 1 wire 21 in the bth stator slot 11, a No. 2 wire 21 in the ath stator slot 11 is connected to a No. 3 wire 21 in the bth stator slot 11, a No. 4 wire 21 in the ath stator slot 11 is connected to a No. 5 wire 21 in the bth stator slot 11, and a No. N wire 21 in the ath stator slot 11 is connected to a No. N+1 wire 21 in the bth stator slot 11; and

a span winding manner at the second end is that a No. 2 wire 21 in the ath stator slot 11 is connected to a No. 1 wire 21 in the bth stator slot 11, a No. 4 wire 21 in the ath stator slot 11 is connected to a No. 3 wire 21 in the bth stator slot 11, a No. 6 wire 21 in the ath stator slot 11 is connected to a No. 5 wire 21 in the bth stator slot 11, and a No. N+2 wire 21 in the ath stator slot 11 is connected to a No. X+1 wire 21 in the bth stator slot 11.

The ath and bth stator slots 11 are two of all the stator slots 11, for example, the first one and the seventh one.

The stator core body 10 is an important component of a magnetic circuit of the motor, and forms a complete magnetic circuit of the motor together with a rotator core and an air gap between a stator and a rotator. In an asynchronous motor, a magnetic flux in the stator core body 10 is alternating, and therefore a core loss is generated. The core body loss includes two parts: a magnetic hysteresis loss and an eddy current loss.

The stator winding 20 is a winding mounted on the stator, that is, copper wires wound on the stator. A winding is a general term of a plurality of coils or a coil group constituting one phase or the entire magnetic circuit. Motors may be classified as centralized motors and distributed motors according to different coil winding shapes and different embedding and wiring manners. Winding and embedding of the centralized winding is simple with low efficiency and poor running performance. Most alternating-current motor stators use distributed windings. Different winding types and specifications are designed and used for motors according to different motor types and models, and coil winding process conditions. The stator winding 20 may be a salient pole winding or a non-salient pole winding according to a relationship between a quantity of magnetic poles of the motor and an actual quantity of magnetic poles formed by winding distribution.

In a specific implementation of the present invention, eight layers of flat wire copper conductors are used for description. Specifically, for a structure based on a profile of the stator slot 11 shown in FIG. 1 and FIG. 2, eight layers of conductors are specifically arranged in a same stator slot 11 according to a motor performance requirement. First to fourth layers are located in a bottom range of the special-shaped slot. A potential arrangement solution for other layers is similar to an arrangement of an even number of layers in the present invention. According to different quantity selections for the conductors in design solutions of the motor, the conductors are embedded into the stator slot 11 layer by layer and a slot profile of a stator is adjusted according to different sizes of the conductors, and a width of the slot bottom location is adjusted according to different solutions, so that as much copper as possible is placed in the stator slot 11 while a stator tooth 12 part of the motor is better used.

In an actual implementation process, in a main structure based on such a slot profile of the stator slot 11, the width of the bottom location of the stator slot 11 of the motor is increased. It is assumed that an area of the original stator slot 11 is m. After the width of the bottom location of the stator slot 11 is adjusted, an overall area of the stator slot 11 is about 1.1 times that for winding arrangement if such a special-shaped slot solution is used. Correspondingly, a quantity of wires 21 in the stator slot 11 may be synchronously increased by about 1.1 times. In such a solution, the stator tooth 12 of the motor maintains in a state similar to a parallel tooth, thereby increasing utilization of the stator tooth 12 part of the motor. The wires 21 of different sizes are relatively properly arranged, thereby reducing a copper loss of the winding, improving overall efficiency of the motor, and facilitating realization of overall performance of the motor.

In some embodiments, the first to fourth layers of wires 21 in the stator slot 11 are arranged side by side in pairs at the bottom of the stator slot 11, and fifth to (N+2)th layers of wires 21 are stacked layer by layer in the stator slot 11.

In some embodiments, the wire 21 is a flat copper wire, and a width-to-thickness ratio of the first to fourth layers of flat copper wires is different from that of the other layers of flat copper wires.

In some embodiments, a length edge of each of the first to fourth layers of wires 21 in the stator slot 11 is arranged along a radial direction of the shaft hole, and a width edge of each of the other layers of wires 21 is arranged along the radial direction of the shaft hole.

In some embodiments, the stator slot 11 successively includes a bottom slot 111, a middle slot 112, and a slot opening 113 from the bottom to the top, widths of the bottom slot 111, the middle slot 112, and the slot opening 113 gradually decrease, and the first to fourth layers of wires 21 are disposed in the bottom slot 111. A height of the bottom slot 111 is consistent with a height of the middle slot 112. A structure between two adjacent stator slots 11 is a stator tooth 12, and a width of the bottom of the stator tooth 12 is consistent with a width of the top of the stator tooth 12.

In some embodiments, a quantity of stator slots 11 is Z, a quantity of poles of the stator winding 20 is P, span winding of the stator winding 20 is implemented at an interval of X stator slots 11, and X=Z/P. In some embodiments, the quantity of stator slots 11 is 48, the quantity of poles of the stator winding 20 is 8, and span winding of the stator winding 20 is implemented at an interval of 6 stator slots 11.

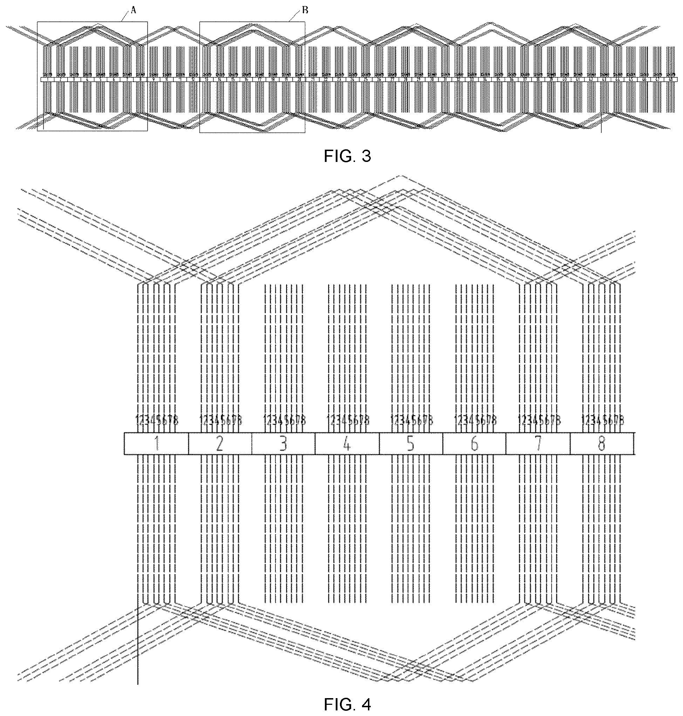

In a specific implementation process, FIG. 3 is a connection diagram of an entire stator winding 20 according to the present invention, and shows a detailed connection path of the stator winding 20. In the present invention, an overall solution of the motor is a pole-slot matching solution involving 48 slots and eight poles. Based on this, according to the current structure based on the slot profile and the current flat wire layer quantity, a copper conductor connection manner of different layers between different slots may be specifically described according to FIG. 3 and FIG. 4. As shown in FIG. 3, a span of the motor is from the first slot to the seventh slot. A first layer of copper conductor is connected to a first layer of the seventh slot, the first layer of the seventh slot is led out and then connected to a second layer of the first slot, the second layer of the first slot is led out and then connected to a third layer of the seventh slot, the third layer of the seventh slot is led out and then connected to a fourth layer of the first slot, the fourth layer of the first slot is led out and then connected to a fifth layer of the seventh slot, the fifth layer of the seventh slot is led out and then connected to a sixth layer of the first slot, the sixth layer of the first slot is led out and then connected to a seventh layer of the seventh slot, the seventh layer of the seventh slot is led out and then connected to an eighth layer of the first slot, and the eight layer of the first slot is led out and then connected to an eighth layer of an eighth slot. The eighth layer of the eighth slot of copper conductor is connected to a next pole coil of the motor. Winding is successively performed in the connection manner between the layers of the first slot and the layers of the seventh slot, until a first layer of a thirteenth slot is finally led out and winding connection of the thirteenth slot is completed. To balance back electromotive forces, winding layer connection needs to be performed based on a long span.

In some embodiments, when span winding is performed, spans for the end windings of the stator winding 20 are that a first stator slot 11, a seventh stator slot 11, a thirteenth stator slot 11, a twentieth stator slot 11, a twenty-sixth stator slot 11, a thirty-third stator slot 11, a thirty-seventh stator slot 11, a forty-third stator slot 11, and the first stator slot 11 are successively and cyclically connected. Further, in the spans for the end windings, a wire 21 in a fourteenth stator slot 11 is connected to a wire 21 in a nineteenth stator slot 11.

Specifically, as shown in FIG. 4, the first layer of the thirteenth slot is connected to a first layer of the twentieth slot after being led out, the first layer of the twentieth slot is connected to a second layer of the thirteenth slot after being led out, the second layer of the thirteenth slot is connected to a third layer of the twentieth slot after being led out, the third layer of the twentieth slot is connected to a fourth layer of the thirteenth slot after being led out, the fourth layer of the thirteenth slot is connected to a fifth layer of the twentieth slot after being led out, the fifth layer of the twentieth slot is connected to a sixth layer of the thirteenth slot after being led out, the sixth layer of the thirteenth slot is connected to a seventh layer of the twentieth slot after being led out, and the seventh layer of the twentieth slot is connected to an eighth layer of the thirteenth slot after being led out. Different layers of copper conductors of a next pole coil are connected in a same manner as that between the first slot and the seventh slot. In such a connection manner, a problem that width-to-thickness ratios of copper conductor coils between different layers in the structure based on such a slot profile are inconsistent is resolved, and a problem that welding is difficult to be implemented at a technological level due to the foregoing problem is resolved. In addition, it should be particularly noted that, to ensure electromotive force balance of the winding coils, in such a winding connection manner, winding coils of different layers of the fourteenth slot span to the nineteenth slot to form a short-pitch effect, to further reduce winding harmonics and improve sine wave quality of voltage excitation.

In a specific example, in the pole-slot matching solution involving 48 slots and eight poles, spans for the motor are from the first slot to the seventh slot, from the seventh slot to the thirteenth slot, from the thirteenth slot to the twentieth slot, from the twentieth slot to the twenty-sixth slot, from the twenty-sixth to the thirty-second slot, from the thirty-second to the thirty-seventh slot, from the thirty-seventh slot to the forty-third slot, from the forty-third to the first slot; and from a second slot to the eighth slot, from the eighth slot to the fourteenth slot, from the fourteenth to the nineteenth slot, from the nineteenth to a twenty-fifth slot, from the twenty-fifth slot to a thirty-first slot, from the thirty-first to a thirty-eighth slot, from the thirty-seventh slot to a forty-fourth slot, and from the forty-fourth slot to the second slot in the stator slots.

In an entire process, the first layer of copper conductor of the first slot is connected to the first layer of the seventh slot, the first layer of the seventh slot is connected to the second layer of the first slot after being led out, the second layer of the first slot is connected to the third layer of the seventh slot after being led out, the third layer of the seventh slot is connected to the fourth layer of the first slot after being led out, the fourth layer of the first slot is connected to the fifth layer of the seventh slot after being led out, the fifth layer of the seventh slot is connected to the sixth layer of the first slot after being led out, the sixth layer of the first slot is connected to the seventh layer of the seventh slot after being led out, the seventh layer of the seventh slot is connected to the eighth layer of the first slot after being led out, and the eight layer of the first slot is connected to the eighth layer of the eighth slot after being led out. The eighth layer of copper conductor of the eighth slot is connected to the next pole coil of the motor.

The first layer of the thirteenth slot is connected to a second layer of the seventh slot after being led out, the second layer of the seventh slot is connected to a third layer of the thirteenth slot after being led out, the third layer of the thirteenth slot is connected to a fourth layer of the seventh slot after being led out, the fourth layer of the seventh slot is connected to a fifth layer of the thirteenth slot after being led out, the fifth layer of the thirteenth slot is connected to a sixth layer of the seventh slot after being led out, the sixth layer of the seventh slot is connected to a seventh layer of the thirteenth slot after being led out, and the seventh layer of the thirteenth slot is connected to an eighth layer of the seventh slot after being led out.

A first layer of the twentieth slot is connected to a second layer of the thirteenth slot after being led out, the second layer of the thirteenth slot is connected to a third layer of the twentieth slot after being led out, the third layer of the twentieth slot is connected to a fourth layer of the thirteenth slot after being led out, the fourth layer of the thirteenth slot is connected to a fifth layer of the twentieth slot after being led out, the fifth layer of the twentieth slot is connected to a sixth layer of the thirteenth slot after being led out, the sixth layer of the thirteenth slot is connected to a seventh layer of the twentieth slot after being led out, and the seventh layer of the twentieth slot is connected to an eighth layer of the thirteenth slot after being led out.

A first layer of the twenty-sixth slot is connected to a second layer of the twentieth slot after being led out, the second layer of the twentieth slot is connected to a third layer of the twenty-sixth slot after being led out, the third layer of the twenty-sixth slot is connected to a fourth layer of the twentieth slot after being led out, the fourth layer of the twentieth slot is connected to a fifth layer of the twenty-sixth slot after being led out, the fifth layer of the twenty-sixth slot is connected to a sixth layer of the twentieth slot after being led out, the sixth layer of the twentieth slot is connected to a seventh layer of the twenty-sixth slot after being led out, and the seventh layer of the twenty-sixth slot is connected to an eighth layer of the twentieth slot after being led out.

A first layer of the thirty-second slot is connected to a second layer of the twenty-sixth slot after being led out, the second layer of the twenty-sixth slot is connected to a third layer of the thirty-second slot after being led out, the third layer of the thirty-second slot is connected to a fourth layer of the twenty-sixth slot after being led out, the fourth layer of the twenty-sixth slot is connected to a fifth layer of the thirty-second slot after being led out, the fifth layer of the thirty-second slot is connected to a sixth layer of the twenty-sixth slot after being led out, the sixth layer of the twenty-sixth slot is connected to a seventh layer of the thirty-second slot after being led out, and the seventh layer of the thirty-second slot is connected to an eighth layer of the twenty-sixth slot after being led out.

A first layer of the thirty-seventh slot is connected to a second layer of the thirty-second slot after being led out, the second layer of the thirty-second slot is connected to a third layer of the thirty-seventh slot after being led out, the third layer of the thirty-seventh slot is connected to a fourth layer of the thirty-second slot after being led out, the fourth layer of the thirty-second slot is connected to a fifth layer of the thirty-seventh slot after being led out, the fifth layer of the thirty-seventh slot is connected to a sixth layer of the thirty-second slot after being led out, the sixth layer of the thirty-second slot is connected to a seventh layer of the thirty-seventh slot after being led out, and the seventh layer of the thirty-seventh slot is connected to an eighth layer of the thirty-second slot after being led out.

A first layer of the forty-third slot is connected to a second layer of the thirty-seventh slot after being led out, the second layer of the thirty-seventh slot is connected to a third layer of the forty-third slot after being led out, the third layer of the forty-third slot is connected to a fourth layer of the thirty-seventh slot after being led out, the fourth layer of the thirty-seventh slot is connected to a fifth layer of the forty-third slot after being led out, the fifth layer of the forty-third slot is connected to a sixth layer of the thirty-seventh slot after being led out, the sixth layer of the thirty-seventh slot is connected to a seventh layer of the forty-third slot after being led out, and the seventh layer of the forty-third slot is connected to an eighth layer of the thirty-seventh slot after being led out.

A second layer of the forty-third slot is connected to a third layer of the first slot after being led out, the third layer of the first slot is connected to a fourth layer of the forty-third slot after being led out, the fourth layer of the forty-third slot is connected to a fifth layer of the first slot after being led out, the fifth layer of the first slot is connected to a sixth layer of the forty-third slot after being led out, the sixth layer of the forty-third slot is connected to a seventh layer of the first slot after being led out, and the seventh layer of the first slot is connected to an eighth layer of the forty-third slot after being led out.

Winding is performed successively in the connection manner between the layers in the stator slots, to form the stator winding through long-pitch winding layer connection.

For a stator winding span winding manner between the second slot, the eighth slot, the fourteenth slot, the nineteenth slot, the twenty-fifth slot, the thirty-first slot, the thirty-eighth slot, the forty-fourth slot, and the second slot, completely refer to the wire winding manner between the first slot, the thirteenth slot, the twentieth slot, the twenty-sixth slot, the thirty-second slot, the thirty-seventh slot, the forty-third slot, and the first slot.

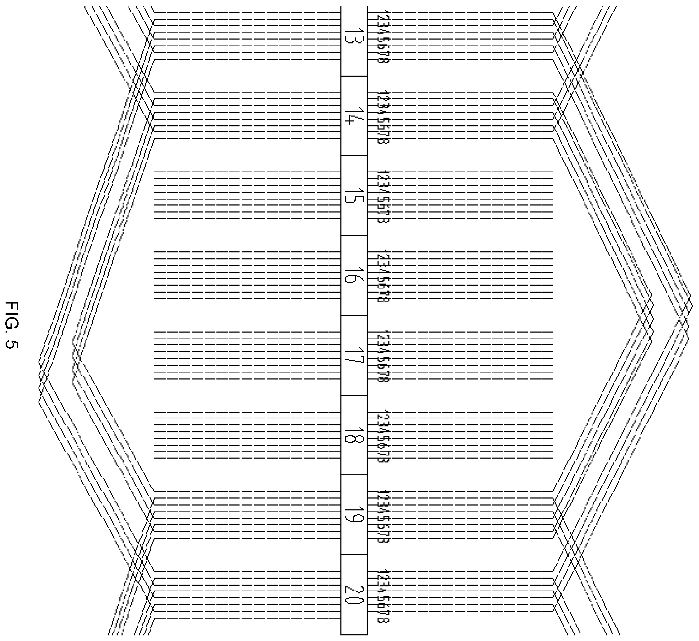

FIG. 5 shows a structure of physical winding coils connected according to FIG. 2, FIG. 3, and FIG. 4.

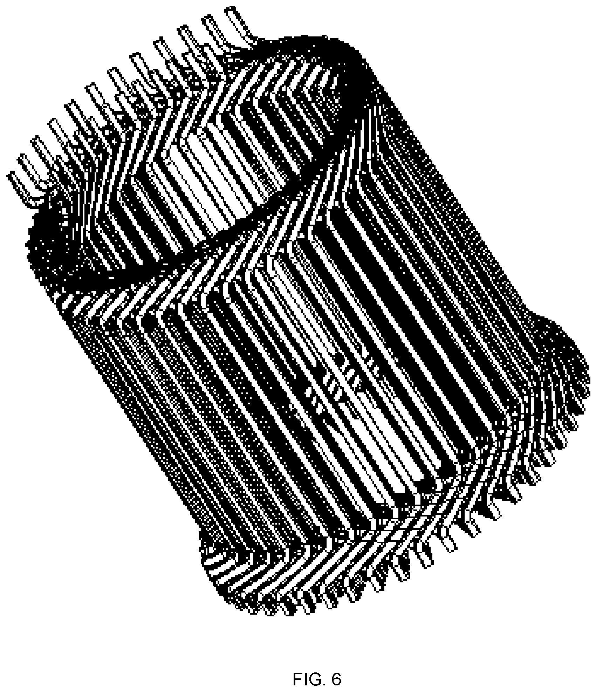

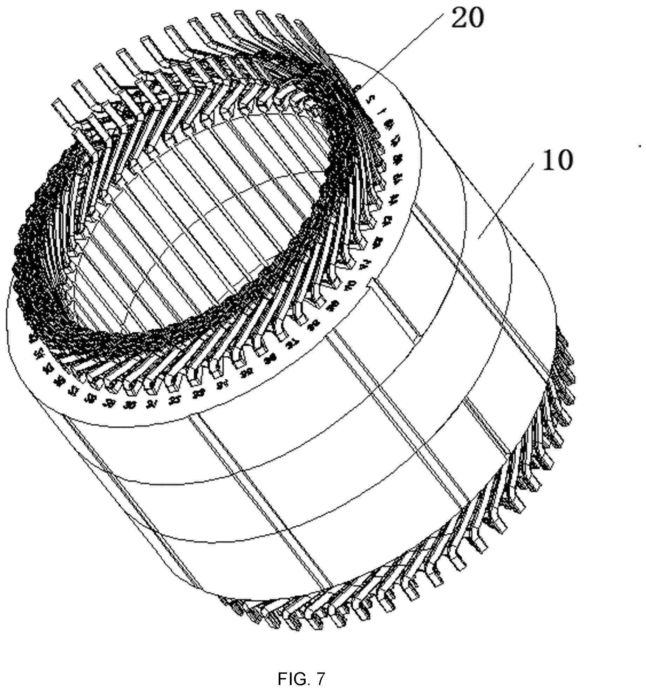

FIG. 6 and FIG. 7 show stator assemblies formed through fitting between the winding connection structure and the stator core.

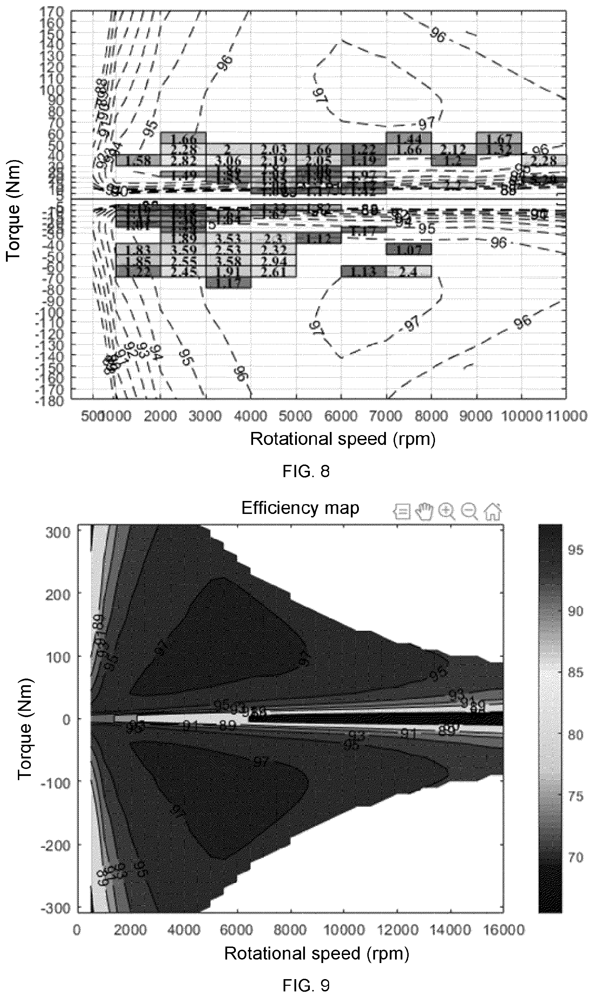

FIG. 8 and FIG. 9 are a distribution map of CLTC operating points of a specific vehicle model that is obtained after a test is performed according to the motor in this solution and a map. In this solution, an amount of copper used in all the stator slots of the motor stator is expected to increase by more than 10%. When a case the same as an electromagnetic solution of a conventional parallel slot profile, including but not limited to same pole-slot matching and a same silicon steel or magnetic steel type, is ensured, efficiency of a motor unit can be ≥95% at a CLTC operating condition, which is increased by ≥1% compared with overall efficiency of a motor unit with a conventional slot profile at such an operating condition, thereby implementing better motor performance with a smaller electromagnetic volume.

The foregoing embodiments merely illustrate principles and effects of the present inventions, but are not intended to limit the present inventions. Any person skilled in the art may modify or alter the foregoing embodiments without departing from the scope of the present inventions. Therefore, all equivalent modifications or alterations completed by a person of ordinary skill in the art without departing from the technical ideas disclosed in the present inventions should still be covered by the claims of the present inventions.

## Claims

1. A stator assembly, comprising:
a stator core body, wherein the stator core body has a hollowed shaft hole, a plurality of stator slots is circumferentially disposed on an inner surface of the shaft hole of the stator core body, and the plurality of the stator slots is configured run through two ends of the stator core body along an axial direction; and
a stator winding, comprising a plurality of groups of wires that are span-wound along the stator slots, wherein
N+2 layers of wires are arranged in each stator slot along the stator core, first to fourth layers of the wires are arranged at a bottom of the stator slot side by side, other layers of the wires are stacked from an outside to an inside along a radial direction of the stator core layer by layer, and N is an even number greater than 2;
the stator winding, the stator winding comprises in-slot windings and end windings, each of the end winding comprises a first end and a second end, and the in-slot windings are correspondingly No. 1 to No. N+2 wires according to the wire layers in the stator slot;
in two stator slots a and b for span winding, a span winding manner at the first end is that a No. 1 wire in the ath stator slot is connected to a No. 1 wire in the bth stator slot, a No. 2 wire in the ath stator slot is connected to a No. 3 wire in the bth stator slot, a No. 4 wire in the ath stator slot is connected to a No. 5 wire in the bth stator slot, and a No. N wire in the ath stator slot is connected to a No. N+1 wire in the bth stator slot; and
a span winding manner at the second end is that a No. 2 wire in the ath stator slot is connected to a No. 1 wire in the bth stator slot, a No. 4 wire in the ath stator slot is connected to a No. 3 wire in the bth stator slot, a No. 6 wire in the ath stator slot is connected to a No. 5 wire in the bth stator slot, and a No. N+2 wire in the ath stator slot is connected to a No. N+1 wire in the bth stator slot.

2. The stator assembly according to claim 1, wherein a quantity of the stator slots is Z, a quantity of poles of the stator winding is P, span winding of the stator winding is implemented at an interval of X stator slots, and X=Z/P.

3. The stator assembly according to claim 2, wherein the first to fourth layers of the wires in the stator slot are arranged side by side in pairs at the bottom of the stator slot, and fifth to (N+2)th layers of the wires are stacked layer by layer in the stator slot.

4. The stator assembly according to claim 3, wherein the wire is a flat copper wire, and a width-to-thickness ratio of the first to fourth layers of flat copper wires is different from that of the other layers of flat copper wires.

5. The stator assembly according to claim 4, wherein a length edge of each of the first to fourth layers of the wires in the stator slot is arranged along a radial direction of the shaft hole, and a width edge of each of the other layers of the wires is arranged along the radial direction of the shaft hole.

6. The stator assembly according to claim 1, wherein the stator slot successively comprises a bottom slot, a middle slot, and a slot opening from a bottom to a top, widths of the bottom slot, the middle slot, and the slot opening gradually decrease, and the first to fourth layers of the wires are disposed in the bottom slot.

7. The stator assembly according to claim 6, wherein a height of the bottom slot is consistent with a height of the middle slot.

8. The stator assembly according to claim 6, wherein a structure between two adjacent stator slots is a stator tooth, and a width of a bottom of the stator tooth is consistent with a width of a top of the stator tooth.

9. The stator assembly according to claim 2, wherein the quantity of the stator slots is 48, the quantity of the poles of the stator winding is 8, and span winding of the stator winding is implemented at an interval of 6 stator slots.

10. The stator assembly according to claim 9, wherein when span winding is performed, spans for the end windings of the stator winding are that a first stator slot, a seventh stator slot, a thirteenth stator slot, a twentieth stator slot, a twenty-sixth stator slot, a thirty-third stator slot, a thirty-seventh stator slot, a forty-third stator slot, and the first stator slot are successively and cyclically connected.

11. The stator assembly according to claim 1, wherein in the spans for the end windings, a wire in a fourteenth stator slot is connected to a wire in a nineteenth stator slot.

12. A motor, comprising:
a stator assembly, wherein the stator assembly is the stator assembly according to any one of claims 1 to 11; and
a motor body, wherein the stator assembly is mounted inside the motor body.
